# FASCICULE DE BREVET EUROPEEN

(11) **EP 0 561 092 B1**
(45) Date de publication et mention de la délivrance du brevet: **06.08.1997**
(21) Numéro de dépôt: 92440035.1
(22) Date de dépôt: 16.03.1992
(51) Int. Cl.: A23L 1/18, A23L 1/182

(54) **Procédé de fabrication d'un produit destiné à l'alimentation humaine**
Verfahren zur Herstellung eines Produkt für die menschliche Nährung
Process for preparing a product for human nitrition

(43) Date de publication de la demande: 22.09.1993
(73) Titulaire: SA SOREB, 28200 Chateaudun (FR)
(72) Inventeur: Grenet, Corinne, F-28200 Chateaudun (FR); Abecassis, Joel, F-34920 Le Cres (FR); Feillet, Pierre, Résidence Concorde, F-34080 Montpellier (FR)
(74) Mandataire: Littolff, Denis

(56) Documents cités:
- EP-A- 0 021 855
- US-A- 2 289 529
- US-A- 3 162 535
- US-A- 3 882 255
- US-A- 3 931 757

## Description

La présente invention concerne un nouveau produit destiné à l'alimentation humaine, ainsi que son procédé de fabrication de préférence en continu.

Ce nouveau produit rentre dans la classe des féculents, au même titre que le riz, le maïs, les pommes de terre et leurs divers dérivés, à l'égard desquels il présente un nombre considérable d'avantages, qui le distinguent à un degré le rendant prépondérant du point de vue de l'économie.

Ce produit consiste en grains de blé dur précuits et décortiqués, qui n'ont jamais, à ce jour, été proposés à la consommation.

En effet, il existe bien sur le marché des grains de blé ordinaire non cuit et du blé dit "soufflé" enrobé de sucre. Bien entendu, il existe également toutes les pâtes alimentaires élaborées à partir de semoule de blé dur.

Par contre, pour autant qu'on le sache, il n'a à ce jour jamais été proposé de grains de blé dur décortiqués et précuits, pour la raison que, malgré sa simplicité apparente, le procédé permettant leur obtention est relativement complexe.

Ainsi, le seul produit obtenu selon un tel processus était connu sous le terme de "boulgour", tel que décrit en 1962 au brevet US 3,162,535, dont l'application était pratiquement réservée à des rations militaires, sans prolongement à l'alimentation domestique de qualité.

Ce produit comportait entre autres la particularité selon laquelle les grains de blé conserveraient environ 50 % de leur enveloppe de son, soit un taux de décorticage (poids de son éliminé par rapport au poids total du grain) d'environ 7,5 à 12,5 % seulement.

Le procédé, premier objet de l'invention, consiste, dans un premier temps, à soumettre les grains de blé dur, après nettoyage et calibrage à un traitement d'hydratation destiné à permettre la gélatinisation ultérieure de l'amidon. De préférence, ce traitement a lieu à chaud après préchauffage. Dans un second temps, après repos à chaud, pour accélérer la migration de l'eau jusqu'au coeur du grain, les grains subissent leur traitement de cuisson proprement dit, dont l'objectif est d'améliorer, d'une part, leur comportement lors des traitements ultérieurs, et d'autre part, leur qualité culinaire finale. Ensuite, dans un troisième temps, les grains, après séchage et refroidissement, subissent une opération de décorticage mécanique et, enfin, dans un quatrième temps, ils subissent un traitement thermique provoquant leur expansion, destiné à les rendre poreux et non collants, ce qui les rend aptes à toutes les applications culinaires. De préférence, avant leur mise sur le marché en vue de ces applications, les grains subissent une réhumidification les ramenant à une humidité normale.

Chacun des traitements individuels précités présente son importance propre dans le procédé d'ensemble consistant dans leur combinaison, et il convient donc d'en commenter les modalités, citées ci-après à titre d'exemple préférentiel :

En premier lieu, les grains de blé dur, par exemple provenant de Beauce ou du Faux Perche, après nettoyage par aspiration et épierreur, sont calibrés au moyen de tambours calibreurs afin de sélectionner la taille des grains désirés, à savoir par exemple 2,0 - 2,8 mm pour les petits grains et 2,8 - 3,5 mm pour les gros grains, les brisures étant éliminées par tambour alvéolaire.

Cela assure l'homogénéité des produits, au niveau de l'humidification, du décorticage et de la cuisson, qui est complète et sans collage. De même, on obtient après cuisson ménagère une texture homogène.

Le produit subit alors le traitement d'humidification après préchauffage.

Ce préchauffage consiste à amener le produit jusqu'à 30 - 100°C de manière rapide et uniforme par passage par exemple dans un applicateur de micro-ondes ou sous des panneaux infrarouges. Le produit est véhiculé par une spire d'acier en rotation dans un tube en PYREX®, ce dernier étant transparent aux micro-ondes, lesquelles sont absorbées par l'eau du produit. La durée du traitement est d'environ 2 minutes et la température de sortie est de 30 à 100° C. Le débit de l'appareil est fonction de la puissance du générateur. Il est maximum si six générateurs sont utilisés dans les conditions temps / puissances suivantes :

| | | | |
|---|---|---|---|
| Pour 1200 Watts : | 120 Kg / h | à | 90 °C |
| | 280 Kg / h | à | 50 °C |
| | 600 Kg / h | à | 30 °C |
| Pour 2000 Watts : | 200 Kg / h | à | 90 °C |
| | 450 Kg / h | à | 50 °C |
| | 1000 Kg / h | à | 30 °C |

Les grains de blé dur ainsi préchauffés sont hydratés par de l'eau chaude, à raison d'environ 38 à 62, et de préférence environ 50 litres d'eau pour 100 Kg de blé, pour parvenir à une humidité finale de 38 à 45 %. Cette eau est dosée avec précision de manière à être absorbée en totalité, ce qui évite l'égouttage et la production d'eaux usées. Là également, le mélange et le transport se font au moyen d'une vis d'Archimède munie de barreaux mélangeurs, tournant à une vitesse de rotation telle que la durée de séjour du produit soit de 20 à 120, et de préférence de 30 à 45 minutes, les températures du blé et de l'eau étant ajustées pour que le mélange se fasse entre 50 et 90 °C, pendant toute la durée de l'opération, au moyen, au besoin, d'un calorifugeage et/ou d'un système de chauffage. On notera que plus le mélange est chaud et plus la pénétration de l'eau est rapide.

Cette opération a pour raison que, pour gélatiniser l'amidon lors de la cuisson, le blé dur doit avoir un taux d'humidité d'au moins 20% pour une cuisson à 140 °C ou 40% pour une cuisson à 90 °C.

Cette étape est suivie d'un repos sans agitation dans une trémie maintenue en température pendant 1 - 2 heures, ce qui a pour effet d'augmenter la vitesse de migration de l'eau au coeur des grains.

L'opération suivante est la cuisson proprement dite des grains. A cet effet, les grains traversent un four micro-ondes à une température d'entrée de 50 - 90 °C et une température de sortie de 90 - 105 °C, pendant une durée de cuisson identique à celle du préchauffage précité.

Ce traitement a plusieurs objectifs essentiels :
- En ce qui concerne les opérations de traitements ultérieurs :
   - comportement au décorticage (résistance à la brisure et respect de la forme du grain),
   - expansion du grain facilitée,
   - pénétration des vitamines et minéraux au cours de la phase d'humidification,
- Et en ce qui concerne les qualités culinaires du produit fini :
   - meilleur aspect et absence de collant,
   - meilleur respect du goût grâce aux températures de cuisson modérées.

Selon un mode de réalisation préférentiel de l'invention, l'ensemble des étapes précitées de préchauffage, humidification, repos et cuisson, qui ont pour but essentiel de gélatiniser l'amidon est réalisé en continu dans une cuve cylindrique unique, maintenue en rotation autour de son axe, et à l'intérieur de laquelle est soudée une vis d'Archimède de telle manière que le produit chemine progressivement de manière programmée à travers la cuve en traversant, à mesure de cette progression, les zones dans lesquelles sont créées et maintenues les conditions correspondant auxdites étapes.

Le maintient desdites conditions est obtenu par injection de vapeur d'eau au moyen de rampes perforées, la température de cette vapeur étant régulée par thermostat, en jouant sur le débit de vapeur.

Le déroulement de l'ensemble du processus est alors conforme aux conditions suivantes, le blé dur et l'eau étant introduits en quantités dosées dans la première spire du cuiseur :
- eau : chaude de préférence (jusqu'à 95°C). Débit d'eau ajusté pour obtenir l'humidité finale souhaitée après absorption complète (en tenant compte de la quantité d'eau apportée par l'injection de vapeur).
- Humidité finale : comprise entre 30 et 50 %, 40 à 45 %. C'est l'humidité nécessaire pour pouvoir gélatiniser l'amidon.
- Température de cuisson : 90 à 100°C et doit être atteinte le plus rapidement possible puis maintenue tout au long du cuiseur.
- Temps de séjour dans le cuiseur : 30 à 90 minutes, et de préférence entre 45 et 60 minutes selon le calibre des grains. Ce temps de séjour est réglé en jouant sur la vitesse de rotation du cylindre :
   - dans un premier temps, 20 minutes pour absorber toute l'eau ajoutée. C'est le début de la gélatinisation en périphérie des grains,
   - puis encore 40 minutes pour la migration de l'eau jusqu'au coeur du grain. La gélatinisation progresse de même, pour atteindre le centre du grain lorsque celui-ci est parvenu au seuil d'humidité requis.

Un tel processus, dit "en continu", présente une particularité qui lui confère un intérêt exceptionnel et qui est lié à la structure même des grains traités.

En effet, dans chaque étape, c'est d'abord la périphérie de chaque grain qui subit les effets du traitement considéré, ces effets se poursuivant ensuite progressivement, pour ne s'exercer au coeur du grain qu'au bout d'un certain temps.

Dans cette variante préférentielle précitée de l'invention, dite "en continu", il est prévu de réaliser les étapes successives du procédé d'ensemble de manière programmée telle que chaque étape débute au cours de l'étape précédente, c'est à dire que les effets périphériques de chaque étape interviennent en réalité non pas après l'achèvement de l'étape précédente, mais pendant que les effets de l'étape précédente interviennent au coeur du grain.

Outre le gain de temps qui en résulte, l'intérêt de ce processus continu est de présenter les avantages suivants :
- une seule opération,
- pas d'excès d'eau, ce qui évite les pertes de vitamines et minéraux dans l'eau de cuisson ainsi que le rejet d'eau sale et permet de limiter la prise d'eau des grains (dans le cas de la cuisson dans un bain d'eau, les grains absorbent de l'eau en excès, jusqu'à 55 % d'humidité, d'où éclatement d'une partie des grains, et coût de séchage exagéré),
- n'abîme pas les grains (ni écrasement, ni chocs, ni frottements...)

Cette cuisson est suivie d'un séchage des grains, par passage dans un tambour rotatif comportant trois cylindres coaxiaux dans lesquels circule un courant d'air dont la température est de 120 - 150 °C à l'entrée et 60 - 80 °C à la sortie, le temps de traversée du produit étant de 30 - 75 minutes. L'air est recyclé pour maintenir son humidité relative supérieure à 20 %, de manière que le produit ne se "frippe" pas et par suite soit bien décortiqué. Le taux d'humidité du produit est ainsi stabilisé à 10 -20 % et de préférence 14 - 17 %, intervalle le plus favorable au décorticage.

A la suite de cette double opération de cuisson / séchage, le produit doit être refroidi jusqu'à température ambiante avant le décorticage. En effet, sinon, les grains sont élastiques et le décorticage, qui les échauffe, risque de les casser. On soumet donc les grains à une ventilation avec pour triple objectif de les refroidir, les durcir et stabiliser leur humidité.

La troisième opération fondamentale du procédé selon l'invention est le décorticage des grains, avec les objectifs qui seront développés ci-après.

A cet effet, les grains sont traités par abrasion dans un décortiqueur vertical composé de sept meules empilées sur un axe vertical et séparées entre elles par des entretoises perforées, le tout tournant à l'intérieur d'un manteau perforé permettant l'évacuation des sons. Le temps de séjour et l'intensité de l'abrasion sont ajustés par réglage de l'ouverture de la trappe de sortie. En moyenne, ce temps de séjour est de 1 à 2 minutes par passage, et deux à quatre passages sont nécessaires. Le taux de décorticage est de 15 - 25 %, tout le grain, sauf le sillon, devant être décortiqué. Les grains sont ensuite triés pour éviter tout ou partie des petites brisures, et principalement les plus fines, qui risqueraient de brunir lors de l'opération d'expansion décrite ci-après.

Cette opération de décorticage a pour but essentiel de réduire le temps de cuisson ménagère du produit final. Ainsi, le temps de cuisson d'un grain décortiqué n'est plus que de 30 minutes environ au lieu de 60 minutes pour un grain ayant conservé ses enveloppes. Subsidiairement, ce traitement permet d'éviter des déformations du grain ou des défauts d'aspect (aspect "tigré") et d'obtenir des propriétés d'appétence supérieure (odeur, goût, texture).

Enfin, la quatrième étape fondamentale du procédé selon l'invention consiste dans un traitement provoquant l'expansion des grains.

A cet effet, les grains, déposés en couche sur un tapis ajouré au moyen d'une table vibrante passent entre un couple de panneaux infrarouges où ils atteignent une température de 170 - 210 °C en 15 à 30 secondes.

Il résulte de ce traitement une expansion des grains de l'ordre de 1,3 - 2,0 fois leur volume initial ce qui les rend poreux.

Cette porosité est essentielle pour accélérer le temps de cuisson ménagère, qui se trouve alors réduit à 10 - 20 minutes suivant la taille des grains, sans altérer les qualités gustatives des grains. Elle a également pour effet de réduire encore le collant des grains.

Avantageusement, à la suite de cette dernière étape, les grains subissent une réhumidification par pulvérisation d'un brouillard d'eau sur les grains chauds étalés en couche mince. Le grain est alors ramené à son humidité initiale, de 12 - 13 %.

Au lieu d'eau, le liquide pulvérisé peut être une solution ou un mélange plus ou moins complexe, éventuellement chargé de fines particules en suspension.

Ceci permet, dans cette étape additionnelle, de réaliser une aromatisation ne nécessitant ni mélange, ni séchage. Le liquide en question est absorbé instantanément par les grains poreux encore chauds et avides d'eau, qui récupèrent ainsi l'humidité perdue au cours de l'expansion, tandis que les substances aromatiques qu'il peut contenir se trouvent fortement adsorbées sur la surface poreuse, ce qui évite qu'elles ne se détachent du grain pour se déposer au fond du conditionnement, comme cela se produit avec les procédés par enrobage. Il devient ainsi possible de doser la quantité d'additifs de toutes sortes, venant compléter l'apport diététique du produit lui-même, à savoir par exemple : épices, sels minéraux, vitamines, acides aminés essentiels, colorants, aromatisants et analogues.

L'invention vise donc, en premier lieu, le procédé de traitement des grains de blé dur, tel qu'il vient d'être décrit.

Elle vise en second lieu, au titre de produits industriels nouveaux, les produits résultant de la mise en oeuvre de ce procédé, dans toutes ses variantes de réalisation.

Ces produits consistent tous essentiellement en grains entiers de blé dur précuit décortiqué, et possèdent les caractéristiques suivantes :
- Taux de décorticage : 15 - 25 %
- Calibrage : de petit (2 - 2,8 mm) à gros (2,8 - 3,5 mm).
- Poids de 1000 grains : de 21 g (petits) à 31 g (gros).
- Humidité : 12 - 13 %.
- Vitesse d'absorption d'eau à l'ébullition (pour doubler leur poids à sec, ce qui correspond à une humidité finale de 67 %) : de 14 minutes (petits grains) à 20 minutes (gros grains).
- Taux d'expansion : 1,3 - 2,0 et de préférence 1,35 - 1,40 fois le volume initial.
- Teneur en oligo-éléments, en mg pour 100 g :

| | | | |
|---|---|---|---|
| • Calcium : | de 39,2 (petits) | à | 39,5 (gros), |
| • Magnésium: | de 26,8 (petits) | à | 37,8 (gros), |
| • Fer : | de 1,74 (petits) | à | 3,08 (gros). |

- Couleur :

| | | |
|---|---|---|
| • Luminance | ≥ 70 (gros) | ≥ 69 (petits) |
| • Indice de rouge | 1,5 (gros) | 1,5 (petits) |
| • Indice de jaune | 30 (gros) | 30 (petits) |

- Saveur : léger goût de noisette et de son.

Bien entendu, s'agissant de produits d'origine naturelle, les valeurs ci-dessus sont susceptibles de varier légèrement, sans que l'on sorte du cadre du présent brevet.

## Revendications

1. Nouveau produit alimentaire pour l'usage humain, consistant en grains de blé dur, précuit et expansé de manière à présenter les propriétés suivantes :
- Taux de décorticage : tout le grain sauf le sillon, soit 15 à 25 %
- Taille : de 2 - 2,8 mm pour les petits grains à 2,8 - 3,5 mm pour les gros grains,
- Poids de 1000 grains : de 21 g à 31 g
- Vitesse d'absorption d'eau au point d'ébullition, pour une teneur finale en eau de 67 % : de 14 minutes à 20 minutes.
- Taux d'expansion : 1,3 - 2,0 et de préférence 1,35 - 1,40 fois le volume initial.
- Teneur en oligo-éléments, en mg / 100 mg :
* Calcium : de 39,2 à 39,5.
* Magnésium : de 26,8 à 37,8.
* Fer : de 1,74 à 3,08.

2. Procédé pour la préparation d'un produit alimentaire selon la revendication 1, du type dans lequel on soumet des grains entiers de blé dur à un traitement d'hydratation-cuisson-séchage-décorticage, caractérisé en ce qu'il comprend :
- dans une première étape, la sélection de grains de blé dur selon une taille prédéterminée,
- dans une seconde étape, le préchauffage desdits grains sélectionnés,
- dans une troisième étape, l'hydratation à chaud des grains préchauffés,
- dans une quatrième étape, le maintien au repos à chaud des grains hydratés ,
- dans une cinquième étape, la cuisson des grains jusqu'à gélatinisation à coeur des grains,
- dans une sixième étape, le séchage et le refroidissement des grains cuits,
- dans une septième étape, le décorticage mécanique des grains, sur tout le grain sauf le sillon, soit un taux de décorticage de 15 à 25% au moyen de meules à axe vertical,
- dans une huitième étape, l'expansion des grains décortiqués,
- et dans une neuvième étape, la ré-humidification des grains expansés, jusqu'à leur teneur initiale en eau,

3. Procédé selon la revendication 2, caractérisé en ce que la seconde, la troisième, la quatrième et la cinquième étapes sont réalisées en continu dans un réacteur unique, ce réacteur consistant en une cuve cylindrique, maintenue en rotation autour de son axe, à l'intérieur de laquelle est soudée une vis d'Archimède de telle manière que le produit chemine progressivement en traversant cette cuve, laquelle est équipée de rampes d'injection de vapeur d'eau, ledit procédé étant conduit de manière telle que les étapes successives se chevauchent, chaque étape commençant avant la fin de l'étape précédente, de sorte que les effets périphériques de chaque étape sur les grains débutent pendant le temps que les effets de l'étape précédente atteignent le coeur du grain.

4. Procédé selon la revendication 3, caractérisé en ce que la durée totale desdites seconde, troisième, quatrième et cinquième étape ainsi regroupées est comprise entre 30 et 90 minutes, la quantité d'eau introduite en vue de l'hydratation étant dosée avec précision de manière à correspondre sans excès à la quantité de grains, la teneur en eau du produit à l'issue de ladite hydratation étant comprise entre 30 % et 50 %, et la cuisson ayant lieu à une température comprise entre 90 et 100 ° C.

5. Procédé selon l'une des revendications 2 et 3, caractérisé en ce que, au cours de la sixième étape, les grains cuits sont séchés dans un courant d'air à une température d'entrée de 120 - 150° C et une température de sortie de 60 - 80° C pendant 30 - 75 minutes, puis refroidis à température ambiante, de manière qu'à l'issue de ce séchage, la teneur en eau du produit est ramenée à une valeur comprise entre 10 et 20 % et de préférence entre 14 et 17 %.

6. Procédé selon l'une des revendications 2 et 3, caractérisé en ce que, au cours de la neuvième étape, les grains expanses sont re-humidifiés à leur teneur initiale en eau d'environ 12 -13% par pulvérisation d'eau ou d'une solution ou suspension aqueuse, un tel agent aqueux contenant facultativement des additifs choisis dans le groupe consistant en agents aromatisants, épices, sels minéraux et vitamines.

## Claims

1. Novel food product for human use, consisting of hard wheat grains, precooked and expanded so as to exhibit the following properties :
- Degree of hulling : all the grain except the crease, namely 15 to 25 %,
- Size : from 2 - 2.8 mm for small grains to 2.8 - 3.5 mm for large grains,
- Weight of 1000 grains : from 21 g to 31 g,
- Water absorption rate at the boiling point, for a final water content of 67 % : 14 minutes to 20 minutes,
- Expansion ratio : 1.3 -2.0 and preferably 1.34 - 1.40 times the initial volume.
- Trace element content, in mg/100 mg :
* Calcium : from 39.2 to 39.5
* Magnesium : from 26.8 to 37.8
* Iron : from 1.74 to 3.08.

2. Process for preparing a food product according to claim 1, of the type wherein whole hard wheat grains are subjected to a hydration-cooking-drying-husking treatment, characterized in that it comprises :
- in a first stage, selecting hard wheat grains according to a predetermined size,
- in a second stage, preheating the said selected grains,
- in a third stage, hydrating with heat the preheated grains,
- in a fourth stage, allowing the hot hydrated grains to stand,
- in a fifth stage, cooking the grains until they are gelatinized to the core,
- in a sixth stage, drying and cooling the cooked grains,
- in a seventh stage, mechanically hulling the grains, over all the grain except the crease, namely a degree of hulling of 15 to 25 %, by means of mills with a vertical axis,
- in an eighth stage, expanding the hulled grains, and
- in a ninth stage, rehumidifying the expanded grains to their initial water content.

3. Process according to claim 2, characterized in that the second, third, fourth and fifth stages are carried out continuously in a single reactor, this reactor consisting of a cylindrical vessel, maintained in rotation about its axis, inside which is welded an archimedean screw so that the product travels progressively while crossing this vessel, which is equipped with steam injection manifolds, the said process being conducted so that the successive stages overlap, each stage commencing before the end of the preceding stage, so that the peripheral effects of each stage on the grains commence during the time that the effects of the preceding stage reach the core of the grain.

4. Process according to claim 3, characterized in that the total duration of the said second, third, fourth and fifth stages thus grouped together is between 30 and 90 minutes, the quantity of water introduced for the purpose of hydration being precisely metered so as to correspond without excess to the quantity of grains, the water content of the product at the end of the said hydration being between 30 % and 50 %, and cooking having taken place at a temperature of between 90 and 100°C.

5. Process according to either claim 2 or 3, characterized in that, during the sixth stage, the cooked grains are dried in a current of air at an inlet temperature of 120 - 150°C and an outlet temperature of 60 - 80°C for 30 - 75 minutes, and then cooled to room temperature so that at the end of this drying the water content of the product is brought to a value of between 10 and 20 % and preferably between 14 and 17 %.

6. Process according to either claim 2 or 3, characterized in that, during the ninth stage, the expanded grains are rehumidified to their initial water content of approximately 12-13 % by spraying with water or a with a solution or aqueous suspension, such an aqueous agent optionally containing additives selected from the group consisting of flavouring agents, spices, inorganic salts and vitamins.

## Patentansprüche

1. Neues Lebensmittelprodukt für den menschlichen Verzehr, das aus Hartweizenkörnern besteht, vorgekocht und expandiert ist, so daß es die folgenden Eigenschaften aufweist:
- Enthülsungsbetrag: das gesamte Korn mit Ausnahme der Furche, d. h. 15 bis 25 %,
- Größe: von 2-2,8 mm für die kleinen Körner bis 2,8-3,5 mm für die großen Körner,
- Gewicht von 1000 Körnern: von 21 g bis 31 g,
- Wasserabsorptionsgeschwindigkeit am Siedepunkt für einen endgültigen Wassergehalt von 67 %: von 14 Minuten bis 20 Minuten,
- Expandierungsbetrag: um den Faktor 1,3-2,0 und vorzugsweise 1,35-1,40 bezüglich des Anfangsvolumens,
- Gehalt an Spurenelementen in mg/100 mg:
* Calcium: von 39,2 bis 39,5,
* Magnesium: von 26,8 bis 37,8,
* Eisen: von 1,74 bis 3,08.

2. Verfahren zum Herstellen eines Lebensmittelprodukts nach Anspruch 1, des Typs, in dem die vollständigen Hartweizenkörner einer Hydratations-Koch-Trocknungs-Enthülsungs-Bearbeitung unterworfen werden, dadurch gekennzeichnet, daß es enthält:
- in einem ersten Schritt die Auswahl der Hartweizenkörner nach einer vorgegebenen Größe,
- in einem zweiten Schritt die Vorerwärmung der ausgewählten Körner,
- in einem dritten Schritt die Wärmehydratation der vorerwärmten Körner,
- in einem vierten Schritt das Warmhalten der hydrierten Körner,
- in einem fünften Schritt das Kochen der Körner bis zur Gelierung im Inneren der Körner,
- in einem sechsten Schritt die Trocknung und die Kühlung der gekochten Körner,
- in einem siebten Schritt die mechanische Enthülsung der Körner, d. h. des gesamten Korns bis auf die Furche, mit einem Enthülsungsbetrag von 15 bis 25 %, mittels Schleifscheiben mit vertikaler Achse,
- in einem achten Schritt die Expandierung der enthülsten Körner,
- und in einem neunten Schritt die Wiederbefeuchtung der expandierten Körner bis zu ihrem anfänglichen Wassergehalt.

3. Verfahren nach Anspruch 2, dadurch gekennzeichnet, daß der zweite, der dritte, der vierte und der fünfte Schritt ohne Unterbrechung in einem einzigen Reaktor verwirklicht werden, wobei dieser Reaktor aus einer zylindrischen Wanne besteht, für die eine Drehung um ihre Achse aufrechterhalten wird und in der eine archimedische Schraube in der Weise angeschweißt ist, daß das Produkt nach und nach wandert, indem es diese Wanne durchquert, die mit Rampen zum Einleiten von Wasserdampf ausgerüstet ist, wobei das Verfahren in der Weise ausgeführt wird, daß die aufeinanderfolgenden Schritte überlappen, wobei jeder Schritt vor dem Ende des vorhergehenden Schritts beginnt, derart, daß die Wirkungen jedes Schritts auf die äußere Umfangsfläche der Körner während der Zeit beginnen, in der die Wirkungen des vorhergehenden Schritts das Korninnere erreichen.

4. Verfahren nach Anspruch 3, dadurch gekennzeichnet, daß die Gesamtdauer des zweiten, des dritten, des vierten und des fünften Schritts, die so gegliedert sind, zwischen 30 und 90 Minuten liegt; daß die für die Hydratation eingeleitete Wassermenge präzise in der Weise dosiert wird, daß sie ohne Überschuß der Kornmenge entspricht, wobei der Wassergehalt des Produkts am Ende der Hydratation zwischen 30 % und 50 % liegt und wobei das Kochen bei einer Temperatur zwischen 90 und 100 °C stattfindet.

5. Verfahren nach einem der Ansprüche 2 und 3, dadurch gekennzeichnet, daß während des sechsten Schritts die gekochten Körner während 30-75 Minuten in einem Luftstrom bei einer Eingangstemperatur von 120-150 °C und bei einer Ausgangstemperatur von 60-80 °C getrocknet werden und dann auf Umgebungstemperatur abgekühlt werden, so daß am Ende dieser Trocknung der Wassergehalt des Produkts auf einen Wert zurückgeführt ist, der zwischen 10 und 20 % und vorzugsweise zwischen 14 und 17 % liegt.

6. Verfahren nach einem der Ansprüche 2 und 3, dadurch gekennzeichnet, daß während des neunten Schritts die expandierten Körner wieder auf den anfänglichen Wassergehalt von ungefähr 12-13 % befeuchtet werden, indem Wasser oder eine Lösung oder eine wäßrige Suspension zerstäubt wird, wobei ein solcher wäßriger Wirkstoff wahlfrei Additive enthalten kann, die aus der Gruppe ausgewählt sind, die aus Aromastoffen, Gewürzen, Mineralsalzen und Vitaminen besteht.
